# EUROPEAN PATENT SPECIFICATION

(11) **EP 1 291 148 B1**
(45) Date of publication and mention of the grant of the patent: **31.05.2006**
(21) Application number: 02019808.1
(22) Date of filing: 05.09.2002
(51) Int. Cl.: B29C 45/28

(54) **Valve pin actuating mechanism and method of actuating thereof**
Ventilnadelbetätigunsmechanismus und Verfahren zur dessen Betätigung
Mécanisme de commande de l'aiguille d'obturation dans une presse à injecter et son procédé de commande

(30) Priority: 07.09.2001 CA 2357083
(43) Date of publication of application: 12.03.2003
(73) Proprietor: MOLD-MASTERS LIMITED, Georgetown Ontario L7G 5W8 (CA)
(72) Inventor: Babin, Denis, Georgetown, Ontario L7G 5W8 (CA)
(74) Representative: Grünecker, Kinkeldey, Stockmair & Schwanhäusser Anwaltssozietät

(56) References cited:
- GB-A- 1 306 697
- US-A- 4 013 393
- US-A- 4 712 995
- US-A- 5 948 450

## Description

### FIELD OF THE INVENTION

This invention relates to an injection molding machine, and more particularly to a valve pin actuating mechanism for an injection molding machine.

### BACKGROUND OF THE INVENTION

Commonly, melt flow in an injection molding machine is controlled by a valve pin, which is moved in a melt passage by an actuating mechanism. Depending on the layout constraints of the melt passages and other components in an injection molding machine, it can be desirable to provide an actuating mechanism for a valve pin in a melt channel, that extends laterally to the valve pin.

The technical literature shows several hot runner injection nozzle designs having a valve pin actuating mechanism incorporating a lateral arm, or linkage, that directly engages a valve pin to push the valve pin towards a mold gate to stop the transfer of molten material from the nozzle into the mold cavity. Reference is made in this regard to US Patent 3,806,295, US Patent 4,026,518, US Patent 4,222,733 and US Patent 4,272,236. In these patents, however, the lateral arm does not engage the valve pin in order to move it back to an 'open' position. Rather, the movement of the valve pin away from the mold gate is achieved by the back pressure generated by the pressurized melt in the nozzle. In these designs the valve pin is not attached to any guiding sleeve movable inside the nozzle. A typical example of this lateral valve gating approach is shown in Figure 9, which shows a mechanism disclosed in US Patent 4,272,236.

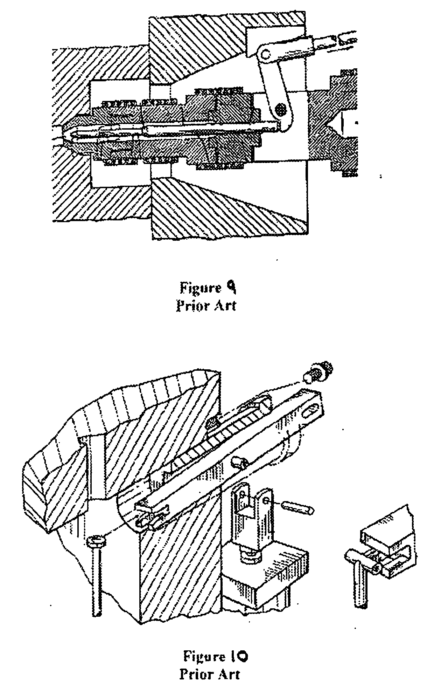

The technical literature further shows hot runner injection nozzles where the valve pin is engaged laterally by an arm, or linkage. This design makes possible to actuate the valve pin inside the nozzle in both directions relative to the mold gate. Reference is made in this regard to US Patent 3,488,810, US Patent 4,712,995 and US Patent 4,793,795 where the lateral arm, or linkage has circular movement with respect to the valve pin. In these designs the valve pin is engaged directly by the linkage, and is not attached to a guiding sleeve moveable inside the nozzle. A typical example of this lateral valve gating approach is shown in Figure 10, which shows a mechanism disclosed in US Patent 4,712,995.

A generic valve pin actuating mechanism for use with a valve pin is known from GB 1 306 697 A. This valve pin actuating mechanism comprising a reciprocable element locating in a chamber for connection to the valve pin and for reciprocating the valve pin within a melt passage. The valve pin actuating mechanism comprising a two armed lever and an actuator for moving the two armed lever.

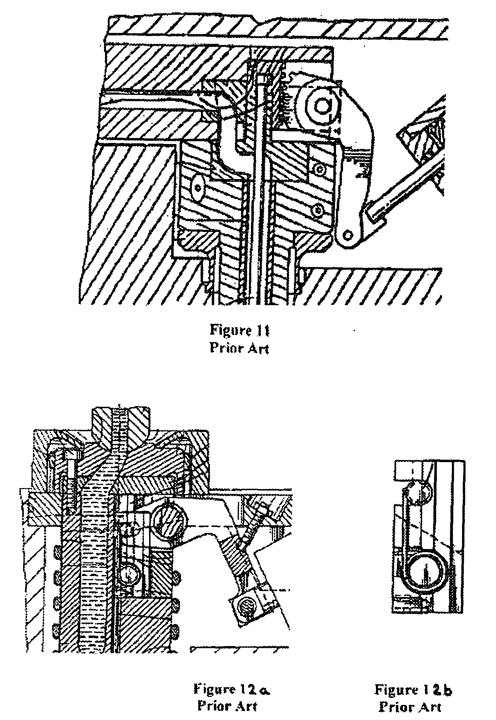

The technical literature further shows hot runner injection nozzles where the valve pin is engaged laterally by an arm, or linkage. Reference is made in this regard to US Patent 4,919,606, US Patent 5,902,614, US Patent 5,948,450 and US Patent 5,984,661. In these designs, the valve pin is attached to a guiding sleeve movable inside the nozzle, and the lateral arm, or linkage, has a circular movement with respect to the valve pin. Typical examples of this lateral valve gating approach are shown in Figures 11, 12a and 12b, which show mechanisms disclosed in US Patent 4,919,606 and US Patent 5,948,450 respectively. In the more recent US 5,948,450, the lateral arm does not directly engage the guiding sleeve, (also referred to as a sled). As shown in Figures 12a and 12b, the actuating mechanism of the '450 patent includes a lateral arm that engages a pin, which is, in turn, connected to the sled. Furthermore, the pin is retained in place by an additional spring. The mechanism disclosed in the '450 patent includes many parts, which inherently increases its complexity and the cost of production and which can reduce its reliability. It is known that, due to the high temperature of operation, which can be, for example, in the range of 250°C, and due to the huge frequency of injection cycles, which can be, for example, in the range of 400 movements/minute, it is desirable to have a minimum number of parts involved in the actuation of the valve pin.

There is a continuing need for a laterally actuated valve gating mechanism that is reliable in operation, that provides reduced stresses on the valve pin and is made of a reduced number of components.

### SUMMARY OF THE INVENTION

The present invention is defined by the valve pin actuating mechanism of claim 1 and by the method of claim 12.

In a first aspect, the invention is directed to a valve pin actuating mechanism for use with a valve pin, the valve pin being moveable in a portion of a melt passage of an injection molding machine, the melt passage having an inlet for receiving melt from a melt source. The valve pin actuating mechanism includes a valve pin guiding element, a linkage element and an actuator: The valve pin guiding element is for connection to the valve pin and for guiding the valve pin along a line of travel. The valve pin guiding element has first and second receiving surfaces, wherein at least one of the receiving surfaces is substantially perpendicular to the line of travel. The linkage element has first and second arms having inwardly facing, opposed engagement surfaces for engaging the first and second receiving surfaces on said valve pin guiding element. The actuator is for moving the linkage element.

In a preferred embodiment, at least one of the engagement surfaces on the first and second arms is arcuate.

In a second aspect, the invention is directed to a valve pin actuating mechanism for use with a valve pin, the valve pin being moveable in a portion of a melt passage of an injection molding machine, the melt passage having an inlet for receiving melt from a melt source. The valve pin actuating mechanism includes a valve pin guiding element, a linkage element and an actuator. The valve pin guiding element is for connection to the valve pin and for guiding movement of the valve pin in the melt passage. The linkage element has first and second arms having inwardly facing, opposed engagement surfaces for engaging the valve pin guiding element. At least one of the engagement surfaces is arcuate. The actuator is for moving said linkage element.

In a third aspect, the invention is directed to a valve pin actuating mechanism for use with a valve pin, the valve pin being moveable in a portion of a melt passage of an injection molding machine, the melt passage having an inlet for receiving melt from a melt source. The valve pin actuating mechanism includes a valve pin guiding element, a linkage element and an actuator. The valve pin guiding element is for supporting the valve pin and for movement of the valve pin and guiding element together in a guide channel. The valve pin guiding element has first and second outer receiving surfaces. The linkage element has first and second arms for engaging the outer receiving surfaces on the valve pin guiding element. The actuator is for moving the linkage element.

In a fourth aspect, the invention is directed to a hot runner nozzle system for an injection molding machine. The hot runner nozzle system includes an injection nozzle, a valve pin and a valve pin actuating mechanism. The injection nozzle has a nozzle body defining a nozzle melt passage. The nozzle melt passage has an inlet for receiving melt from a melt source. The injection nozzle includes a heater for heating melt in the nozzle melt passage. The valve pin is moveable in the nozzle melt passage, so that the valve pin cooperates with the nozzle melt passage for controlling melt flow through the nozzle melt passage. The valve pin actuating mechanism is any of the valve pin actuating mechanisms described above.

In a fifth aspect, the invention is directed to an injection molding machine. The injection molding machine includes a manifold, an injection nozzle, a valve pin and a valve pin actuating mechanism. The manifold has a manifold melt passage having a n inlet for receiving melt from a melt source. The injection nozzle has a nozzle body defining a nozzle melt passage. The nozzle melt passage is downstream from the manifold melt passage. The injection nozzle includes a heater for heating melt in the nozzle melt passage. The valve pin is moveable in the nozzle melt passage, so that the valve pin cooperates with the nozzle melt passage for controlling melt flow through said nozzle melt passage, The valve pin actuating mechanism is any of the valve pin actuating mechanisms described above.

In a sixth aspect, the invention is directed to a method of moving a valve pin between first and second positions in an injection molding machine. The method includes:
supporting the valve pin in a valve pin guiding element for movement of the valve pin and guiding element together, the guiding element having first and second outer, planar receiving surfaces;
supporting and guiding the valve pin guiding element in a channel, the channel being adapted for movement of the valve pin guiding element along a line of travel; and
applying forces to the receiving surfaces of the guiding element to effect movement of the valve pin between the first and second positions.

### BRIEF DESCRIPTION OF THE DRAWINGS

For a better understanding of the present invention and to show more clearly how it may be carried into effect, reference will now be made by way of example to the accompanying drawings, in which:
Figure 1 is a sectional elevation view of an injection molding machine having a plurality of valve pin actuating mechanisms in accordance with an embodiment of the present invention;
Figure 2 is an elevation view of a portion of the injection molding machine of Figure 1, showing the valve pin actuating mechanism and a valve pin in an 'open' position;
Figure 3 is an elevation view of a portion of the injection molding machine of Figure 1, showing the valve pin actuating mechanism and a valve pin in a 'close' position;
Figure 4 is a perspective view of the valve pin guiding element of Figure 1;
Figure 5 is a perspective view of the linkage element of the valve pin actuating mechanism of Figure 1;
Figures 6a and 6b are views of the linkage element engaging the guiding element of Figure 1;
Figure 7 is a view of the travel path of a portion of the linkage element and a portion of the guiding element of Figure 1;
Figure 8 is a sectional view of an injection molding machine having a stack mold, having valve pin actuating mechanisms as shown in Figure 1;
Figure 9 is an elevation view of a portion of a first injection molding machine having a valve pin actuating mechanism of the prior art;
Figure 10 is an elevation view of a portion of a second injection molding machine having a valve pin actuating mechanism of the prior art;
Figure 11 is an elevation view of a portion of a third injection molding machine having a valve pin actuating mechanism of the prior art; and
Figures 12a and 12b are elevation views of a portion of a fourth injection molding machine having a valve pin actuating mechanism of the prior art.

### DETAILED DESCRIPTION OF THE INVENTION

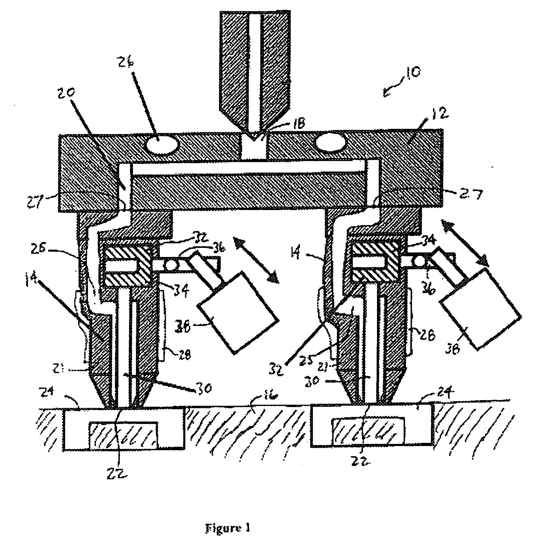

Reference is made to Figure 1, which shows an injection molding machine in accordance with the present invention, shown generally at 10. Injection molding machine 10 can be used for the production of molded articles. As an example embodiment, injection molding machine 10 may have a manifold 12, a plurality of nozzles 14, a mold cavity plate 16, a plurality of valve pins 30 and a plurality of valve pin actuating mechanisms 32. Manifold 12 has a mold machine inlet 18, which leads to a plurality of manifold melt passages 20. A heater 26 is included in manifold 12 to heat melt in manifold melt passages 20. Each nozzle 14 includes a nozzle body 21 and a heater 28. Nozzle body 21 defines a nozzle melt passage 25, which has an inlet 27 that is downstream from one of the melt passages 20. Heater 28 is used to heat the flow of melt through nozzle 14. The mold cavity plate 16 defines a plurality of mold cavities 24 that are downstream from the nozzle melt passages 25. The junction between a nozzle melt passage 25 and a mold cavity 24 is referred to as a gate 22. It will be appreciated that the melt passage configuration shown in the Figures is exemplary and that other melt passage configurations are permissible within the scope of the invention.

Valve pins 30 extend into a portion of the nozzle melt passages 25 and are moveable therein along a line of travel parallel to that portion of the nozzle melt passages 25, by valve pin actuating mechanisms 32, to control the flow of melt into the mold cavities 24. The valve pins 30 may be generally pin shaped, as shown, or alternatively they may have any suitable shape for controlling the flow of melt in nozzle melt passages 25.

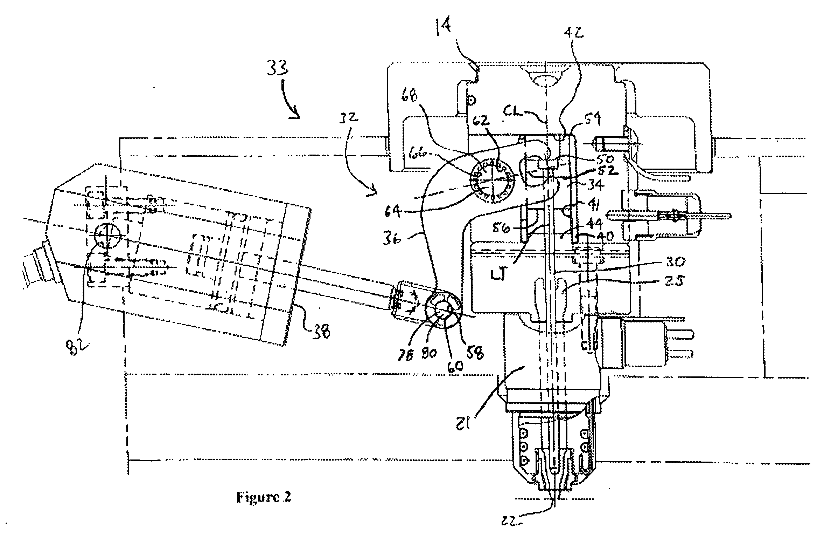

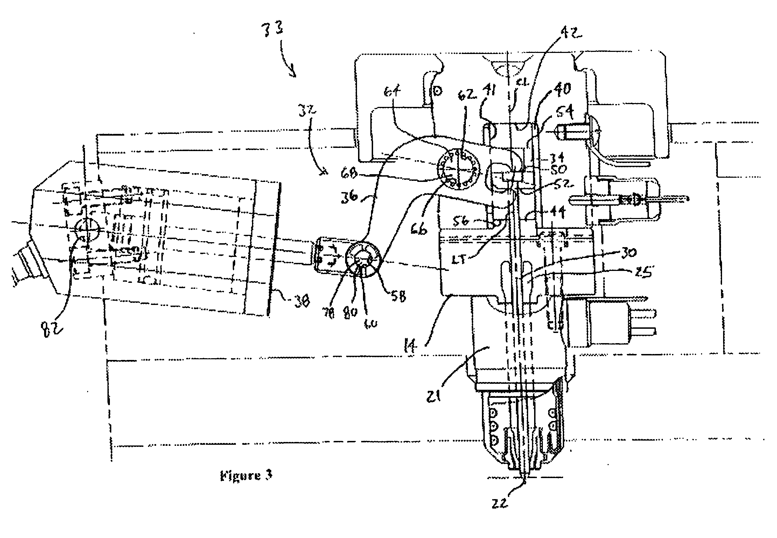

Reference is made to Figure 2, which shows a nozzle system 33, each of which includes one of the nozzles 14, one of the valve pin 30 and one of the valve pin actuating mechanisms 32. The actuating mechanism 32 includes a valve pin guiding element 34, a linkage element 36 and a actuator 38. The valve pin actuating mechanism 32 can be used to access the valve pin laterally, and move the valve pin 30 through a range of positions, or between any suitable first and second positions. For example, for the embodiment as shown, where the valve pin is positioned near the gate 22, the valve pin actuating mechanism can be used to move the valve pin between an 'open' (first) position (as shown in Figure 2), wherein melt flow is permitted to enter the mold cavity 24, and a 'close' (second) position, wherein the melt flow is prevented from entering the mold cavity 24 (see Figure 3). Alternatively, the actuating mechanism 32 can be used to move the valve pin to a second position to permit less flow through a nozzle melt passage 25, than in the first position. Alternatively, the actuating mechanism can be used to move valve pins between first and second positions in other portions of an injection molding machine, such as, for example, in sprue mechanisms between manifold plates in a stack-mold.

The valve pin guiding element 34 supports and guides the valve pin 30. A sleeve 40 defines a channel 41. The valve pin guiding element 34 slides in channel 41 along a line of travel LT so that valve pin 30 moves in nozzle melt passage 25 between the first and second positions. Sleeve 40 has an aperture therethrough permitting the linkage element 36 to connect to guiding element 34.

A first limit surface 42 is positioned to limit the travel of the guiding element 34 at one end of channel 41. Similarly, a second limit surface 44 is positioned to limit the travel of the guiding element 34 at the other end of channel 41.

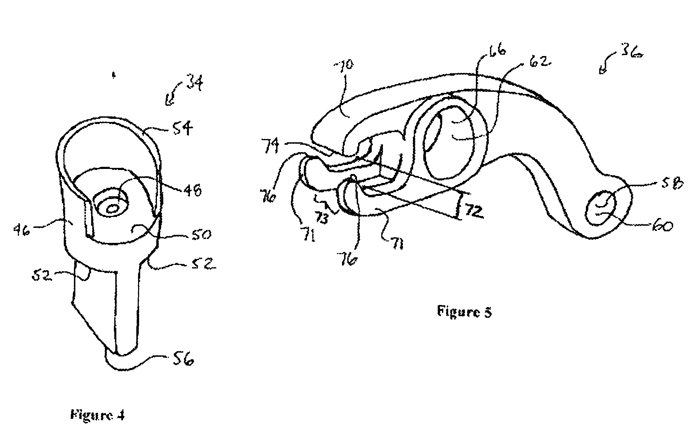

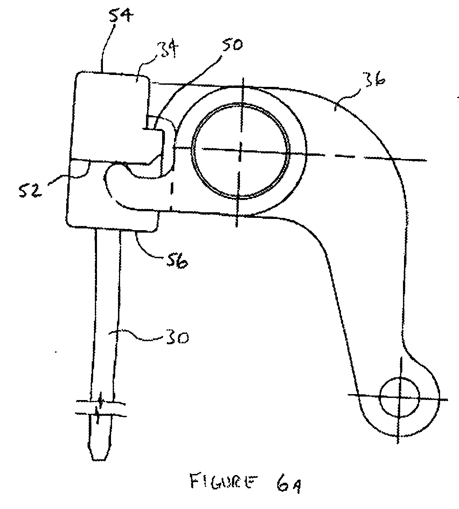

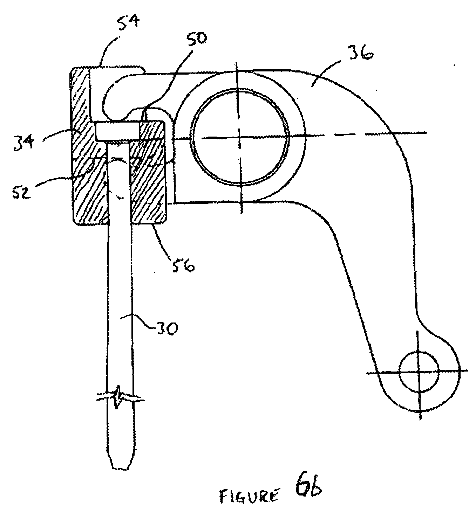

Reference is now made to Figures 4, 5, 6a and 6b. Guiding element 34 has a sliding surface 46 for sliding within channel 41. Sliding surface 46 is preferably generally cylindrical, as shown. Alternatively, however, sliding surface 46 may be square-shaped, rectangle-shaped, or may have any other shape suitable for permitting sliding.

Guiding element 34 has a receiving bore 48, which is shouldered, for receiving and capturing valve pin 30. Any suitable holding and guiding means for valve pin 30 can alternatively be used, however. For example, guiding element 34 can be integrally joined to valve pin 30. Guiding element 34 includes a first, outer, receiving surface 50, and two second, outer, receiving surfaces 52. The first and second receiving surfaces 50 and 52, receive the linkage element 36. The first and second receiving surfaces 50 and 52 are preferably planar, and perpendicular (see Figures 2 and 3) to the line of travel LT of the guiding element 34 in the channel 41. Alternatively, one of receiving surfaces 50 and 52, (ie. either receiving surface 50 or both of receiving surfaces 52), is planar and substantially perpendicular to the line of travel LT of the guiding element 34 in the channel 41, and the other of the surfaces is at least angled suitably for engagement by the linkage element 36 and movement of the guiding element 34 in the line of travel LT.

The valve pin guiding element 34 has first and second shoulders 54 and 56. Shoulders 54 and 56 cooperate with the first and second limit surfaces 42 and 44 to limit the travel of the guiding element 34, and the valve pin 30.

The linkage element 36 connects the actuator 38 to the valve pin guiding element 34. The linkage element 36 includes a first connector 58, which rotatably connects linkage element 36 to actuator 38. The first connector 58 may be, for example, a bore 60. Alternatively, connector 58 may be any suitable connection means for providing a rotatable connection between linkage element 36 and actuator 38.

The linkage element 36 includes a second connector 62, which pivotally connects linkage element 36 to a portion 64 on the molding machine 10 (see Figures 2 and 3). The second connector 62 and portion 64 may be any suitable pivotal connection means, such as, for example, a bore 66, and a shaft 68 respectively.

The linkage element 36 has a first arm 70 and may have, for example, two second arms 71 for engaging the valve pin guiding element 34. The first and second arms 70 and 71 define a gap 72 therebetween. The second arms 71 define a second gap 73 permitting valve pin 30 and the shoulder portion 56 to extend therethrough. The first arm 70 and the second arms 71 have opposing, inwardly facing engagement surfaces 74 and 76 respectively. Engagement surface 74 engages receiving surface 50 for movement of the valve pin 30, in one direction (in this case - towards the 'close' position). Engagement surfaces 76 engage the second receiving surfaces 52 for movement of the valve pin 30 in the direction towards the 'open' position. Preferably, as shown, engagement surfaces 74 and 76 are arcuate, so that an actuation force for actuating the guiding element 34 and the valve pin 30, is not exerted through an edge, throughout the range of motion of the valve pin 30 and guiding element 34. Alternatively, one of the engagement surfaces 74 and 76 (ie. either surface 74, or both surfaces 76) is arcuate. Alternatively, however, engagement surfaces 74 and 76 may have any suitable shape for engaging surfaces 50 and 52 for moving guiding element 34. Gap 72 permits arm 70 to engage guiding element 34 at or near a selected location, such as, for example, at or near the centerline CL of the guiding element 34. Similarly, gaps 72 and 73 together permit second arms 71 to engage the guiding element 34 at or near a selected point.

Reference is made to Figure 2. The actuator 38 may be any type of actuator, such as a pneumatic or hydraulic cylinder, or alternatively an electrical actuator. As shown, the actuator may be, for example, a linear, hydraulic actuator. Actuator 38 includes a connector 78 for rotatably connecting actuator 38 to linkage element 36. Connector 78 may be any suitable type of connector, such as, for example, a pin 80, which is received in bore 60. Actuator 38 is mounted to the injection molding machine 10 by a connector 82 which permits rotation thereabout. Connector 82 may be any suitable type of connector, such as for example a pin and bearing or bore arrangement.

During the cavity-filling portion of an injection cycle, the valve pin is in the 'open' position. Melt flows from a melt source (not shown) through the inlet 18, through melt passages 20 and 25, through gates 22 and into the mold cavities 24. Once this is completed, the melt flow to the cavities 24 is shut off. To shut off the melt flow to the gates 22, the actuator 38 is retracted, causing the rotation of the linkage element 36. The first engagement surface 74 engages the first receiving surface 50, moving the valve pin guiding element 34 and valve pin 30 towards the 'close' position. As shown in Figure 3, the movement of the valve pin 30 is stopped when the shoulder 56 on the valve pin guiding element 34 contacts the limit surface 44.

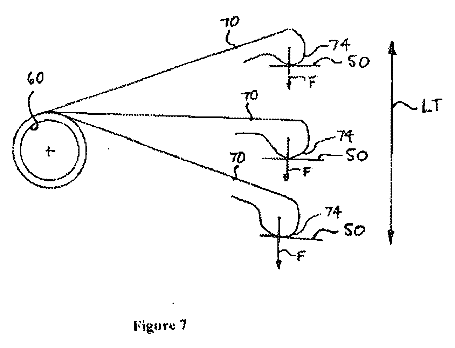

Reference is made to Figure 7, which shows the path followed by the arm 70 during the travel of the valve pin between the 'open' and 'close' positions. The direction of a force, (excluding frictional forces), transmitted between the first engagement surface 74 and the receiving surface 50, is shown by the line F. Regardless of the shape of the engagement surface 74, the line of force F remains perpendicular to the receiving surface 50, throughout the range of motion of the guiding element 34, ignoring friction. If the receiving surface 50 is perpendicular to the line of travel LT of the valve pin guiding element 34 and the valve pin 30, as shown in Figures 2 and 3, the line of force F is parallel to the line of travel LT of the valve pin guiding element 34 and the valve pin 30, throughout the range of travel of the guiding element 34 and the valve pin 30. Thus, lateral forces on the guiding element 34 are reduced.

Lateral forces, however, will exist due to frictional forces between the engagement surface 74 and the receiving surface 50. Because the lateral forces are exerted directly on the guiding element 34, and not on the valve pin 30, stresses, such as bending stresses on the valve pin 30 are reduced. Furthermore, the guiding element 34 may, for example, have a larger bearing area, (which is sliding surface 46), as compared to the valve pin 30, and thus can be subject to reduced stresses from any lateral forces created between surfaces 74 and 50.

Reference is made to Figure 3. The operation of the actuating mechanism to move the valve pin to the 'open' position is similar to the operation of the actuating mechanism 32 to move the valve pin 30 into the 'close' position. The actuator 38 extends, thereby rotating linkage element 36 about shaft 68 in the opposite direction to that for closing the gate 22. Engagement surfaces 76 engage receiving surfaces 52, to move the valve pin guiding element 34 and the valve pin 30 away from gate 22. The path of the arms 71 and the guiding element 34 to open gate 22, is similar, but opposite, to that of arm 70 and guiding element 34 to close gate 22.

Linkage element 36 has been described to include a single first arm, and two second arms, and guiding element 34 to include a single first receiving surface and two second receiving surfaces. Alternatively, however, the guiding element 34 may be configured in such a way that a single second arm may be used. For example, the guiding element may include a disc spaced above a valve pin holding portion, so that the linkage element engages the two surfaces of the disc. In this case, a single, centred second arm can be included on the linkage element, rather than two second arms.

In an embodiment where the engagement surfaces on the arms of the linkage element are arcuate, the receiving surfaces may have any suitable shape for receiving the engagement surfaces.

In an embodiment wherein the receiving surfaces on the guiding element are not substantially perpendicular to the line of travel LT, the engagement surfaces on the arms of the linkage element may have any suitable shape for engaging the receiving surfaces.

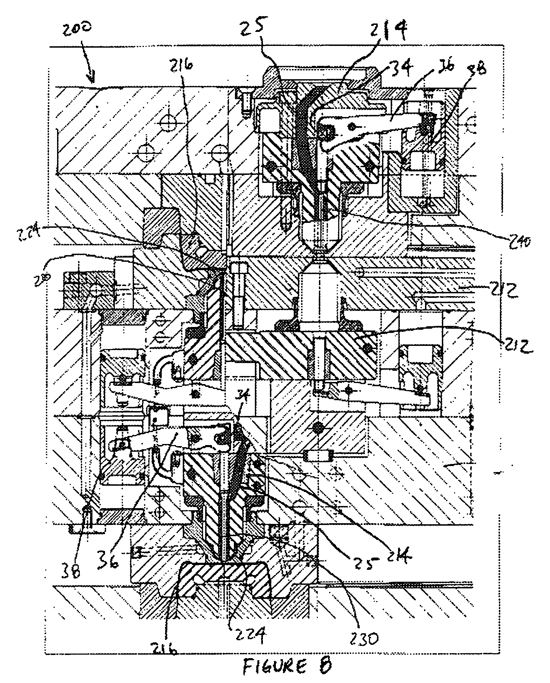

Reference is now made to Figure 8, which shows an injection molding machine 200 having a stack mold, having a plurality of nozzle assemblies 33 and valve pin actuating mechanisms 32 in accordance with the present invention. Molding machine 200 is similar to the stack mold molding machine disclosed in US Patent No. 4,212,626, except that the valve pin actuating mechanisms on the machine disclosed in that patent are replaced by valve pin actuating mechanisms 32. Molding machine 200 includes a plurality of manifold plates 212 which transfer melt from a melt source (not shown) to a plurality of mold cavity plates 216. Nozzle systems 33 including nozzles 214, valve pins 230 and valve pin actuating mechanisms 32 are used. Valve pin actuating mechanisms 32 are used to control valve pins 240 in melt transfer mechanisms to control melt flow between manifold plates 212. As well, actuating mechanisms are used to control valve pins 230 to control melt flow into mold cavities 224 in mold cavity plates 216.

## Claims

1. A valve pin actuating mechanism (32) for use with a valve pin (30), the valve pin (30) being moveable in a portion of a melt passage (25) of an injection molding machine (10), the melt passage having an inlet for receiving melt from a melt source, the valve pin actuating mechanism (32) comprising:
a valve pin guiding element (34) having first and second outer planer receiving surfaces (50, 52) for connection to the valve pin (30) and for guiding movement of the valve pin (30) in the melt passage (25) along a line of travel (LT) between a first and a second position
a linkage element (36), said linkage element (36) having first and second arms (70, 71) having inwardly facing, opposed engagement surfaces (74, 76) for engaging said first and second planar receiving surfaces (50, 52) of said valve pin guiding element (34); and
an actuator (38) for moving the linkage element (36) whereby
at least one of said engagement surfaces (74, 76) is arcuate.

2. A valve pin actuating mechanism (32) as claimed in claim 1, wherein:
said valve pin guiding element (34) for connection to the valve pin (30) and for guiding the valve pin (30) along a line of travel (LT) has first and second receiving surfaces (50, 52), wherein at least one of said receiving surfaces (50, 52) is perpendicular to said line of travel (LT) and;
said linkage element (36) has opposed engagement surfaces (74, 76) for engaging said first and second receiving surfaces (50, 52) on said valve pin guiding element (34).

3. A valve pin actuating mechanism (32) as claimed in claim 2, wherein said linkage element (36) is pivotable about an axis of rotation, so that rotation of said linkage element (36) moves said valve pin guiding element (34) along said line of travel (LT).

4. A valve pin actuating mechanism (32) as claimed in claim 2, wherein a portion of said valve pin (30) is engaged directly by at least one of said first and second engagement surfaces (74, 76).

5. A valve pin actuating mechanism (32) as claimed in claim 1, wherein said valve pin guiding element (34) supports the valve pin (30), such that the valve pin (30) and guiding element (34) can move together in a guide channel (41), whereby said valve pin guiding element (34) has first and second outer planar receiving surfaces (50, 52).

6. A hot runner nozzle system for an injection molding machine (10), comprising:
a nozzle body (21) defining a nozzle melt passage (25), said nozzle melt passage (25) having an inlet for receiving melt from a melt source;
a heater (26) connected to said nozzle body (21), said heater (26) for heating melt in said nozzle melt passage (25);
a valve pin (30), said valve pin (30) being moveable in said nozzle melt passage (25), so that said valve pin (30) co-operates with said nozzle melt passage (25) for controlling melt flow through said nozzle melt passage (25); and
a valve pin actuating mechanism (32) as claimed in claim 5.

7. An injection molding machine (10), comprising:
a manifold plate (212) having a manifold melt passage (20), said manifold melt passage (20) having a melt source inlet for receiving melt from a melt source;
an injection nozzle (14), said injection nozzle (14) having a nozzle body (21), said nozzle body (21) defining a nozzle melt passage (25), said nozzle melt passage (25) downstream from said manifold melt passage (20), said injection nozzle (14) including a heater (26) for heating melt in said nozzle melt passage (25);
a valve pin (30), said valve pin (30) being moveable in said nozzle melt passage (25), so that said valve pin (30) co-operates with said nozzle melt passage (25) for controlling melt flow through said nozzle melt passage (25); and
a valve pin actuating mechanism (32) as claimed in claim 1.

8. An injection molding machine (10), comprising:
a manifold plate (212) having a manifold melt passage (20), said manifold melt passage (20) having a melt source inlet for receiving melt from a melt source;
an injection nozzle (14), said injection nozzle (14) having a nozzle body (21), said nozzle body (21) defining a nozzle melt passage (25), said nozzle melt passage (25) downstream from said manifold melt passage (20), said injection nozzle (14) including a heater (26) for heating melt in said nozzle melt passage (25);
a valve pin (30), said valve pin (30) being moveable in said nozzle melt passage (25), so that said valve pin (30) co-operates with said nozzle melt passage (25) for controlling melt flow through said nozzle melt passage (25); and
a valve pin actuating mechanism (32) as claimed in claim 2.

9. An injection molding machine (10) as claimed in claim 8, further comprising a mold cavity plate (16), said mold cavity plate (16) having a mold cavity (24) downstream from said nozzle melt passage (25).

10. An injection molding machine (10) as claimed in claim 9, wherein said manifold (12) includes a plurality of manifold melt passages (20) downstream from said melt source inlet, said injection molding machine (10) further comprises a plurality of injection nozzles (14) having nozzle melt passages (25) downstream from said manifold melt passages (20) and said mold cavity plate (16) includes a plurality of mold cavities (24) downstream from said plurality of nozzle melt passages (25).

11. An injection molding machine (10), comprising:
a manifold plate (212) having a manifold melt passage (20), said manifold melt passage (20) having a melt source inlet for receiving melt from a melt source;
an injection nozzle (14), said injection nozzle (14) having a nozzle body (21), said nozzle body (21) defining a nozzle melt passage (25), said nozzle melt passage (25) downstream from said manifold melt passage (20), said injection nozzle (14) including a heater (26) for heating melt in said nozzle melt passage (25);
a valve pin (30), said valve pin (30) being moveable in said nozzle melt passage (25), so that said valve pin (30) co-operates with said nozzle melt passage (25) for controlling melt flow through said nozzle melt passage (25); and
a valve pin actuating mechanism (32) as claimed in claim 5.

12. A method of moving a valve pin (30) between first and second positions in an injection molding machine (10), comprising:
supporting said valve pin (30) in a valve pin guiding element (34) such that said valve pin (30) and guiding element (34) can move together, said guiding element (34) having first and second outer, planar receiving surfaces (50, 52);
supporting and guiding said valve pin guiding element (34) in a channel (41), said channel (41) being adapted for movement of said valve pin guiding element (34) along a line of travel (LT); and
applying forces to said receiving surfaces (50, 52) of said guiding element (34), by a linkage element (36) to effect movement of said valve pin (30) between a first and a second positions, said linkage element (36) having first and second arms (70, 71) having inwardly facing, opposed engagement surfaces (74, 76) engaging the first and second outer planar receiving surfaces (50, 52) on said valve pin guiding element (34);
whereby at least one of said engagement surfaces (74, 76) is arcuate.

13. A method of moving a valve pin (30) between first and second positions as claimed in claim 12, wherein at least one of said receiving surfaces (50, 52) is perpendicular to said line of travel (LT).

## Patentansprüche

1. Ein Ventilnadelbetätigungsmechanismus (32) zur Verwendung mit einer Ventilnadel (30), die Ventilnadel (30) ist in einem Teil eines Schmelzedurchgangs (25) einer Spritzgießmaschine (10) bewegbar, der Schmelzedurchgang weist einen Einlass zum Aufnehmen von Schmelze aus einer Schmelzequelle auf, der Ventilnadelbetätigungsmechanismus (32) umfasst:
ein Ventilnadelführungselement (34) mit ersten und zweiten äußeren ebenen Aufnahmeoberflächen (50, 52) zum Verbinden mit der Ventilnadel (30) und zum Führen der Bewegung der Ventilnadel (30) in dem Schmelzedurchgang (25) entlang einer Bewegungslinie (LT) zwischen einer ersten und zweiten Position,
ein Verbindungselement (36), das Verbindungselement weist erste und zweite Arme (70, 71) auf mit nach Innen zugewandten sich gegenüberliegenden Eingriffsoberflächen (74, 76) zum Eingreifen in die ersten und zweiten ebenen Aufnahmeoberflächen (50, 52) des Ventilnadelführungselements (34); und
einen Stellantrieb (38) zum Bewegen des Verbindungselements (36), wobei mindestens eine der Eingriffsoberflächen (74, 76) gebogen ist.

2. Ein Ventilnadelbetätigungsmechanismus (32) nach Anspruch 1, wobei das Ventilnadelführungselement (34) zum Verbinden mit der Ventilnadel (30) und zum Führen der Ventilnadel (30) entlang einer Bewegungslinie (LT) erste und zweite Aufnahmeoberflächen (50, 52) aufweist, wobei mindestens eine der Aufnahmeoberflächen (50, 52) senkrecht zu der Bewegungslinie (LT) ist; und
das Verbindungselement (36) gegenüberfiegende Eingriffsoberflächen (74, 76) aufweist zum Eingriff in die ersten und zweiten Aufnahmeoberflächen (50, 52) des Ventilnadelführungselements (34).

3. Ein Ventilnadelbetätigungsmechanismus (32) nach Anspruch 2, wobei das Verbindungselement (36) drehbar um eine Drehachse ist, so dass eine Drehung des Verbindungselements (36) das Ventilnadelführungselement (34) entlang der Bewegungslinie (LT) bewegt.

4. Ein Ventilnadelbetätigungsmechanismus (32) nach Anspruch 2, wobei ein Teil der Ventilnadel (30) direkt in Eingriff mit mindestens einer der ersten und zweiten Eingriffsoberflächen (74, 76) steht.

5. Ein Ventilnadelbetätigungsmechanismus (32) nach Anspruch 1, wobei das Ventilnadelführungselement (34) die Ventilnadel (30) unterstützt, so dass die Ventilnadel (30) und das Führungselement (34) sich zusammen in einem Führungskanal (41) bewegen können, wobei das Ventilnadelführungselement (34) erste und zweite äußere ebene Aufnahmeoberflächen (50, 52) aufweist.

6. Ein Heißläufer-Düsensystem für eine Spritzgießmaschine (10), umfassend:
einen Düsenkörper (21), der einen Düsenschmelzedurchgang (25) definiert, der Düsenschmelzedurchgang weist einen Einlass zum Aufnehmen von Schmelze aus einer Schmelzequelle auf;
einen Heizer (26) verbunden mit dem Düsenkörper (21), der Heizer (26) erwärmt die Schmelze in dem Düsenschmelzedurchgang (25);
eine Ventilnadel (30), die Ventilnadel (30) ist in dem Düsenschmelzedurchgang (25) bewegbar, so dass die Ventilnadel (30) mit dem Düsenschmelzedurchgang (25) zusammenwirkt, um die Schmelzeströmung durch den Düsenschmelzedurchgang (25) zu steuern; und
ein Ventilnadelbetätigungsmechanismus (32) nach Anspruch 5.

7. Eine Spritzgießmaschine (10), umfassend:
eine Verteilerplatte (212) mit einem Verteilerschmelzedurchgang (20), der Verteilerschmelzedurchgang (20) weist einen Schmelzequelleneinlass auf, um Schmelze aus einer Schmelzequelle aufzunehmen;
eine Einspritzdüse (14), die Einspritzdüse (14) weist einen Düsenkörper (21) auf, der Düsenkörper (21) definiert einen Düsenschmelzedurchgang (25), der Düsenschmelzedurchgang (25) liegt stromabwärts von dem Verteilerschmelzedurchgang (20), die Einspritzdüse (14) umfasst einen Heizer (26), um die Schmelze in dem Düsenschmelzedurchgang (25) zu erwärmen;
eine Ventilnadel (30), die Ventilnadel (30) ist in dem Düsenschmelzedurchgang (25) bewegbar, so dass die Ventilnadel (30) mit dem Düsenschmelzedurchgang (25) zusammenwirkt, um die Schmelzeströmung durch den Düsenschmelzedurchgang (25) zu steuern; und
ein Ventilnadelbetätigungsmechanismus (32) nach Anspruch 1.

8. Eine Spritzgießmaschine (10), umfassend:
eine Verteilerplatte (212) mit einem Verteilerschmelzedurchgang (20), der Verteilerschmelzedurchgang (20) weist einen Schmelzequelleneinlass auf, um Schmelze aus einer Schmelzequelle aufzunehmen;
eine Einspritzdüse (14), die Einspritzdüse (14) weist einen Düsenkörper (21) auf, der Düsenkörper (21) definiert einen Düsenschmelzedurchgang (25), der Düsenschmelzedurchgang liegt stromabwärts von dem Verteilerschmelzedurchgang (20), die Einspritzdüse (14) umfasst einen Heizer, um Schmelze in dem Düsenschmelzedurchgang (25) zu erwärmen;
eine Ventilnadel (30), die Ventilnadel (30) ist in dem Düsenschmelzedurchgang (25) bewegbar, so dass die Ventilnadel (30) mit dem Düsenschmelzedurchgang (25) zusammenwirkt, um die Schmelzeströmung durch den Düsenschmelzedurchgang (25) zu steuern; und
ein Ventilnadelbetätigungsmechanismus (32) nach Anspruch 2.

9. Eine Spritzgießmaschine (10) nach Anspruch 8, weiter umfassend eine Formhohlraumplatte (16), die Formhohlraumplatte (16) weist einen Formhohlraum (24) auf, der stromabwärts von dem Düsenschmelzedurchgang (25) liegt.

10. Eine Spritzgießmaschine (10) nach Anspruch 9, wobei der Verteiler (12) eine Vielzahl von Verteilerschmelzedurchgängen (20) umfasst, die stromabwärts von dem Schmelzequelleneinlass liegen, die Spritzgießmaschine (10) umfasst weiter eine Vielzahl von Einspritzdüsen (14) mit Düsenschmelzedurchgängen (25), die stromabwärts von den Verteilerschmelzedurchgängen (20) liegen und die Formhohlraumplatte (16) umfasst eine Vielzahl von Formhohlräumen (24), die stromabwärts von der Vielzahl von Düsenschmelzedurchgängen (25) liegen.

11. Eine Spritzgießmaschine (10), umfassend:
eine Verteilerplatte (212) mit einem Verteilerschmelzedurchgang (20), der Verteilerschmelzedurchgang (20) weist einen Schmelzequelleneinlass auf, um Schmelze aus einer Schmelzequelle aufzunehmen;
eine Einspritzdüse (14), die Einspritzdüse (14) weist einen Düsenkörper (21) auf, der Düsenkörper (21) definiert einen Düsenschmelzedurchgang (25), der Düsenschmelzedurchgang (25) liegt stromabwärts von dem Verteilerschmelzedurchgang (20), die Einspritzdüse (14) umfasst einen Heizer (26), um Schmelze in dem Düsenschmelzedurchgang (25) zu erwärmen;
eine Ventilnadel (30), die Ventilnadel (30) ist in dem Düsenschmelzedurchgang (25) bewegbar, so dass die Ventilnadel (30) mit dem Düsenschmelzedurchgang (25) zusammenwirkt, um die Schmelzeströmung durch den Düsenschmelzedurchgang (25) zu steuern; und
ein Ventilnadelbetätigungsmechanismus (32) nach Anspruch 5.

12. Ein Verfahren zum Bewegen einer Ventilnadel (30) zwischen einer ersten und zweiten Position in einer Spritzgießmaschine (10), umfassend:
Unterstützen der Ventilnadel (30) in einem Ventilnadelführungselement (34), so dass die Ventilnadel (30) und das Führungselement (34) sich zusammen bewegen können, das Führungselement (34) weist erste und zweite äußere ebene Aufnahmeoberflächen (50, 52) auf;
Unterstützen und Führen des Ventilnadel-Führungselements (34) in einem. Kanal (41), der Kanal (41) ist für die Bewegung des Ventilnadelführungselements (34) entlang einer Bewegungslinie (LT) ausgebildet; und
Aufbringen von Kräften auf die Aufnahmeoberflächen (50, 52) des Führungselements (34) durch ein Verbindungselement (36), um die Bewegung der Ventilnadel (30) zwischen einer ersten und einer zweiten Position zu bewirken, das Verbindungselement (36) weist erste und zweite Arme (70, 71) mit nach Innen zugewandten sich gegenüberliegenden Eingriffsoberflächen (74, 76) auf, die mit den ersten und zweiten äußeren ebenen Aufnahmeoberflächen (50, 52) des Ventilnadel-Führungselements (34) in Eingriff stehen;
wobei mindestens eine der Eingriffsoberflächen (74, 76) gebogen ist.

13. Ein Verfahren zum Bewegen einer Ventilnadel (30) zwischen der ersten und zweiten Position nach Anspruch 12, wobei mindestens eine der Aufnahmeoberflächen (50, 52) senkrecht zu der Bewegungslinie (LT) ist.

## Revendications

1. Mécanisme d'actionnement d'aiguille de soupape (32) à utiliser avec une aiguille de soupape (30), l'aiguille de soupape (30) étant mobile dans une partie d'un passage de matière fondue (25) d'une machine de moulage par injection (10), le passage de matière fondue ayant une entrée pour recevoir la matière fondue provenant d'une source de matière fondue, le mécanisme d'actionnement d'aiguille de soupape (32) comprenant :
un élément de guidage d'aiguille de soupape (34) ayant des première et seconde surfaces de réception planes extérieures (50, 52) pour une connexion à l'aiguille de soupape (30) et pour guider le mouvement de l'aiguille de soupape (30) dans le passage de matière fondue (25) le long d'une ligne de déplacement (LT) entre une première et une seconde positions ;
un élément de tringlerie (36), ledit élément de tringlerie (36) ayant des premier et second bras (70, 71) ayant des surfaces de mise en prise opposées, faisant face vers l'intérieur (74, 76) pour venir en prise avec lesdites première et seconde surfaces de réception planes (50, 52) dudit élément de guidage d'aiguille de soupape (34) ; et
un actionneur (38) pour déplacer l'élément de tringlerie (36) moyennant quoi au moins l'une desdites surfaces de mise en prise (74, 76) est arquée.

2. Mécanisme d'actionnement d'aiguille de soupape (32) selon la revendication 1, dans lequel :
ledit élément de guidage d'aiguille de soupape (34) pour relier l'aiguille de soupape (30) et pour guider l'aiguille de soupape (30) le long d'une ligne de déplacement (LT) a des première et seconde surfaces de réception (50, 52), dans lequel au moins l'une desdites surfaces de réception (50, 52) est perpendiculaire à ladite ligne de déplacement (LT) et ;
ledit élément de tringlerie (36) a des surfaces de mise en prise opposées (74, 76) pour venir en prise avec lesdites première et seconde surfaces de réception (50, 52) sur ledit élément de guidage d'aiguille de soupape (34).

3. Mécanisme d'actionnement d'aiguille de soupape (32) selon la revendication 2, dans lequel ledit élément de tringlerie (36) peut pivoter autour d'un axe de rotation, afin que la rotation dudit élément de tringlerie (36) déplace ledit élément de guidage d'aiguille de soupape (34) le long de ladite ligne de déplacement (LT).

4. Mécanisme d'actionnement d'aiguille de soupape (32) selon la revendication 2, dans lequel une partie de ladite aiguille de soupape (30) vient en prise directement par au moins l'une desdites première et seconde surfaces de mise en prise (74, 76).

5. Mécanisme d'actionnement d'aiguille de soupape (32) selon la revendication 1, dans lequel ledit élément de guidage d'aiguille de soupape (34) supporte l'aiguille de soupape (30), de telle sorte que l'aiguille de soupape (30) et l'élément de guidage (34) puissent se déplacer ensemble dans un canal de guidage (41), moyennant quoi ledit élément de guidage d'aiguille de soupape (34) a des première et seconde surfaces de réception planes extérieures (50, 52).

6. Système de buses de canaux chauffés pour une machine de moulage par injection (10), comprenant :
un corps de buse (21) définissant un passage de matière fondue de buse (25), ledit passage de matière fondue de buse (25) ayant une entrée pour recevoir la matière fondue d'une source de matière fondue ;
un élément chauffant (26) relié audit corps de buse (21), ledit élément chauffant (26) étant prévu pour chauffer la matière fondue dans ledit passage de matière fondue de buse (25) ;
une aiguille de soupape (30), ladite aiguille de soupape (30) étant mobile dans ledit passage de matière fondue de buse (25), afin que ladite aiguille de soupape (30) coopère avec ledit passage de matière fondue de buse (25) pour commander le flux de matière fondue à travers ledit passage de matière fondue de buse (25) ; et
un mécanisme d'actionnement d'aiguille de soupape (32) selon la revendication 5.

7. Machine de moulage par injection (10), comprenant :
une plaque de collecteur (212) ayant un passage de matière fondue de collecteur (20), ledit passage de matière fondue de collecteur (20) ayant une entrée de source de matière fondue pour recevoir la matière fondue provenant d'une source de matière fondue ;
une buse d'injection (14), ladite buse d'injection (14) ayant un corps de buse (21), ledit corps de buse (21) définissant un passage de matière fondue de buse (25), ledit passage de matière fondue de buse (25) étant en aval dudit passage de matière fondue de collecteur (20), ladite buse d'injection (14) comprenant un élément chauffant (26) pour chauffer la matière fondue dans ledit passage de matière fondue de buse (25) ;
une aiguille de soupape (30), ladite aiguille de soupape (30) étant mobile dans ledit passage de matière fondue de buse (25), afin que ladite aiguille de soupape (30) coopère avec ledit passage de matière fondue de buse (25) pour commander le flux de matière fondue à travers ledit passage de matière fondue de buse (25) ; et
un mécanisme d'actionnement d'aiguille de soupape (32) selon la revendication 1.

8. Machine de moulage par injection (10) comprenant :
une plaque de collecteur (212) ayant un passage de matière fondue de collecteur (20), ledit passage de matière fondue de collecteur (20) ayant une entrée de source de matière fondue pour recevoir la matière fondue d'une source de matière fondue ;
une buse d'injection (14), ladite buse d'injection (14) ayant un corps de buse (21), ledit corps de buse (21) définissant un passage de matière fondue de buse (25), ledit passage de matière fondue de buse (25) étant en aval dudit passage de matière fondue de collecteur (20), ladite buse d'injection (14) comprenant un élément chauffant (26) pour chauffer la matière fondue dans ledit passage de matière fondue de buse (25) ;
une aiguille de soupape (30), ladite aiguille de soupape (30) étant mobile dans ledit passage de matière fondue de buse (25), afin que ladite aiguille de soupape (30) coopère avec ledit passage de matière fondue de buse (25) pour commander le flux de matière fondue à travers ledit passage de matière fondue de buse (25) ; et
un mécanisme d'actionnement d'aiguille de soupape (32) selon la revendication 2.

9. Machine de moulage par injection (10) selon la revendication 8, comprenant en outre une plaque à cavité de moule (16), ladite plaque à cavité de moule (16) ayant une cavité de moule (24) en aval dudit passage de matière fondue de buse (25).

10. Machine de moulage par injection (10) selon la revendication 9, dans lequel ledit collecteur (12) comprend une pluralité de passages de matière fondue de collecteur (20) en aval de ladite entrée de source de matière fondue, ladite machine de moulage par injection (10) comprend en outre une pluralité de buses d'injection (14) ayant des passages de matière fondue de buse (25) en aval desdits passages de matière fondue de collecteur (20) et ladite plaque à cavité de moule (16) comprend une pluralité de cavités de moule (24) en aval de ladite pluralité de passages de matière fondue de buse (25).

11. Machine de moulage par injection (10) comprenant :
une plaque de collecteur (212) ayant un passage de matière fondue de collecteur (20), ledit passage de matière fondue de collecteur (20) ayant une entrée de source de matière fondue pour recevoir la matière fondue d'une source de matière fondue ;
une buse d'injection (14), ladite buse d'injection (14) ayant un corps de buse (21), ledit corps de buse (21) définissant un passage de matière fondue de buse (25), ledit passage de matière fondue de buse (25) étant en aval dudit passage de matière fondue de collecteur (20), ladite buse d'injection (14) comprenant un élément chauffant (26) pour chauffer la matière fondue dans ledit passage de matière fondue de buse (25) ;
une aiguille de soupape (30), ladite aiguille de soupape (30) étant mobile dans ledit passage de matière fondue de buse (25), afin que ladite aiguille de soupape (30) coopère avec ledit passage de matière fondue de buse (25) pour commander le flux de matière fondue à travers ledit passage de matière fondue de buse (25) ; et
un mécanisme d'actionnement d'aiguille de soupape (32) selon la revendication 5.

12. Procédé de déplacement d'une aiguille de soupape (30) entre les première et seconde positions dans une machine de moulage par injection (10), comprenant les étapes consistant à :
supporter ladite aiguille de soupape (30) dans un élément de guidage d'aiguille de soupape (34) afin que ladite aiguille de soupape (30) et ledit élément de guidage (34) puissent se déplacer ensemble, ledit élément de guidage (34) ayant des première et seconde surfaces de réception planes extérieures (50, 52) ;
supporter et guider ledit élément de guidage d'aiguille de soupape (34) dans un canal (41), ledit canal (41) étant adapté pour déplacer ledit élément de guidage d'aiguille de soupape (34) le long d'une ligne de déplacement (LT) ; et
appliquer des forces sur lesdites surfaces de réception (50, 52) dudit élément de guidage (34), par un élément de tringlerie (36) afin de déplacer ladite aiguille de soupape (30) entre une première et une seconde positions, ledit élément de tringlerie (36) ayant des premier et second bras (70, 71) ayant des surfaces de mise en prise opposées faisant face vers l'intérieur (74, 76) venant en prise avec les première et seconde surfaces de réception planes extérieures (50, 52) sur ledit élément de guidage d'aiguille de soupape (34) ;
moyennant quoi au moins l'une desdites surfaces de mise en prise (74, 76) est arquée.

13. Procédé de déplacement d'une aiguille de soupape (30) entre les première et seconde positions selon la revendication 12, dans lequel au moins l'une desdites surfaces de réception (50, 52) est perpendiculaire à ladite ligne de déplacement (LT).
